# NEUE EUROPÄISCHE PATENTSCHRIFT

(11) **EP 0 285 048 B2**
(45) Veröffentlichungstag und Bekanntmachung des Hinweises auf die Entscheidung über den Einspruch: **28.10.1998**
(45) Hinweis auf die Patenterteilung: 29.12.1993
(21) Anmeldenummer: 88104923.3
(22) Anmeldetag: 26.03.1988
(51) Int. Cl.: H02K 3/38, H02K 5/22, H02K 29/06

(54) **Elektronisch kommutierter, kollektorloser Gleichstrommotor**
Electronically commutated collectorless D,C, motor
Moteur à courant continu sans collecteur commuté électroniquement

(30) Priorität: 31.03.1987 DE 3710659
(43) Veröffentlichungstag der Anmeldung: 05.10.1988
(73) Patentinhaber: Alcatel SEL Aktiengesellschaft, D-70435 Stuttgart (DE)
(72) Erfinder: Feigel, Josef, Dr., D-8300 Landshut (DE); Pfendler, Klaus, D-7823 Bonndorf (DE)
(74) Vertreter: Pohl, Herbert, Dipl.-Ing.

(56) Entgegenhaltungen:
- EP-A- 0 150 070
- EP-A- 0 180 120
- EP-A- 0 201 129
- DD-A- 123 252
- DE-A- 1 751 280
- DE-A- 2 744 513
- DE-A- 2 930 649
- DE-A- 3 105 318
- DE-A- 3 150 970
- DE-A- 3 229 458
- DE-A- 3 505 092
- US-A- 4 361 773

## Beschreibung

Die Erfindung betrifft einen elektronisch kommutierten, kollektorlosen Gleichstrommotor mit einem einen mehrpolig magnetisierten permanentmagnetischen Körper aufweisenden Läufer, und mit einer den Läufer umgebenden mehrere Stränge aufweisenden Ständerwicklung, die außen von einem magnetischen Rückschluß umgeben ist.

Aus der Offenlegungsschrift DE 32 29 458 A1 ist ein Gleichstrommotor mit einem einen mehrpolig magnetisierten permanentmagnetischen Körper aufweisenden Läufer bekannt. Der Gleichstrommotor hat eine den Läufer umgebende aus mehreren Strängen bestehende Ständerwicklung, die außen von einem magnetischen Rückschluß umgeben ist. Die Wicklungsenden der Stränge sind mit kreisförmig auf einem zylindrischen, zentrisch zur Ständerwicklung angeordneten Körper befindlichen, Anschlußstiften verbunden. Die Ständerwicklung ist daher mechanisch fest mit dem Kunststoffkörper verbunden. Die Lösung weist den Nachteil auf, daß das Wickeln der Enden der Rotorwicklung um Anschlußstifte einen technisch komplizierten Vorgang darstellt.

Aus der europäischen Patentanmeldung EP 0 130 070 A ist ebenfalls ein elektronisch kommutierter, kollektorloser Gleichstrommotor bekannt, bei dem die Stränge der Ständerwicklung fest mit einer Kunststoffmasse verbunden sind. Über die Ausgestaltung der mechanischen Verbindung der Wicklungsenden sind keine Angaben gemacht.

Die Ständerwicklung eines aus der europäischen Patentanmeldung EP 0 180 120 A2 bekannten elektronisch kommutierten, kollektorlosen Gleichstrommotors weist einen Isolierstoffkörper auf, der aus einem scheibenförmig angeordneten und axial verlaufenden rinnenförmigen Nutenkörper besteht. Die Nutenkörper stützen sich auf ein Rohrstück. Die einzelnen Stränge der Ständerwicklung liegen außerhalb der Nutenkörper, wobei die Wicklungsenden mit einer Platine verbunden sind. Die Wicklungsenden sind dabei üblicherweise direkt mit der Platine verlötet.

Der Nachteil der bekannten Gleichstrommotoren liegt nun darin, daß die Wicklungsenden der Ständerwicklung bei der Herstellung der bekannten Gleichstrommotoren nicht automatisch mit dem Kunststoffkörper verbunden werden können.

Aus der Druckschrift EP-A1 201 129 ist eine elektrische Maschine mit wenigsten einer Spule bekannt, deren Wicklungsenden um einen Metallkern herum gewickelt sind. Zum Verlöten der Wicklungsenden werden diese zuerst durch mehrmaliges Wickeln um den Metallkern, der von einer Lötschicht umgeben ist, fixiert.

Die Tatsache, daß die Wicklungsenden zuerst mehrfach um den Metallkern herumgewickelt werden müssen, lassen es als zweifelhaft erscheinen, ob eine solche Wicklung mit Verlötung der Wicklungsenden automatisch herstellbar ist.

Aus der US-A-4 361 773 ist eine zweischenklige Hakenöse zum Anschlaß eines Wicklungsendes bekannt.

Der Erfindung liegt die Aufgabe zugrunde, einen elektronisch kommutierten, kollektorlosen Gleichstrommotor, bei dem die Enden der Stränge einer Ständerwicklung mit auf einem Kunststoffkörper befindlichen Anschlußstiften verbunden sind, zu schaffen, der montagetechnisch einfach hergestellt werden kann.

Diese Aufgabe wird bei einem gattungsgemäßen Gleichstrommotor durch die Merkmale des Anspruchs 1 gelöst.

Weitere Ausgestaltungen der Erfindung sind den übrigen Ansprüchen und der Beschreibung zu entnehmen.

Ein Ausführungsbeispiel der Erfindung wird im folgenden unter Bezug auf die Figuren 1 bis 5 beschrieben. Es zeigen:
- Fig. 1: ein Ausführungsbeispiel des erfindungsgemäßen elektronisch kommutierten, kollektorlosen Gleichstrommotors im Längsschnitt,
- Fig. 2: einen Kunststoffkörper mit Hakenösen im Schnitt,
- Fig. 3: den Kunststoffkörper gemäß Fig. 2,
- Fig. 4: die Ständerwicklung mit Kunststoffkörper und Hakenösen in der Seitenansicht, und
- Fig. 5: einen Blechschnitt des äußeren magnetischen Rückschlusses.

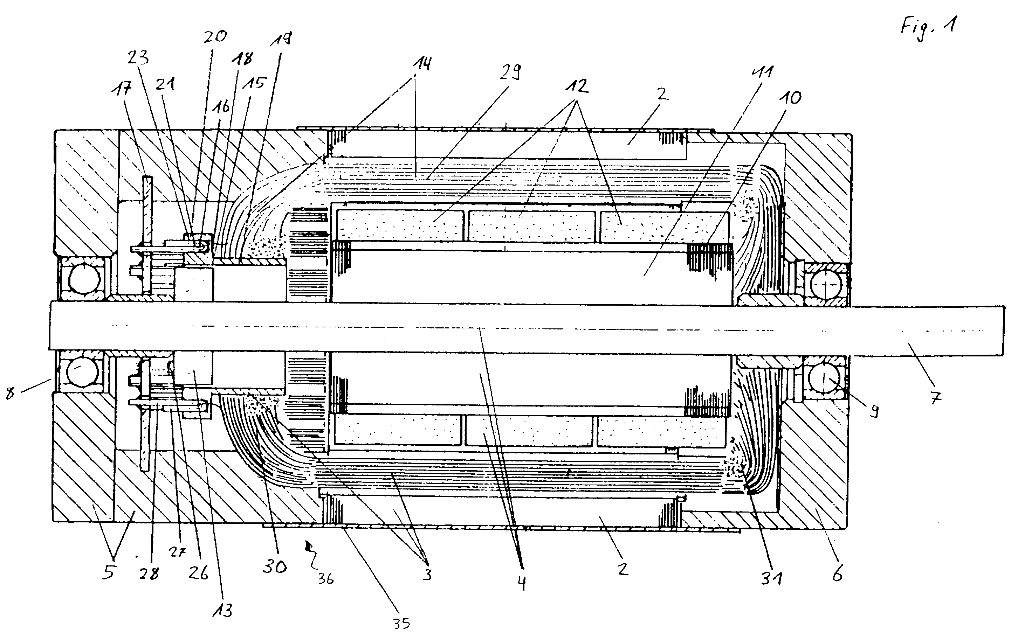

Der erfindungsgemäße elektronisch kommutierte, kollektorlose Gleichstrommotor 1 ist in Fig. 1 im fertiggestellten Zustand abgebildet. Er weist einen äußeren magnetischen Rückschluß 2, einen Ständer 3, einen Läufer 4, und zwei Lagerschilde 5, 6 auf. Die beiden Lagerschilde 5, 6 bilden mit einer Verkleidung 35 das Gehäuse 36 des Gleichstrommotors 1.

Die Welle 7 des Läufers 4 ist über zwei Lager 8, 9 mit den Lagerschilden 5, 6 verbunden. Der Läufer 4 weist einen Stahlzylinder oder einen aus Blechen 10 geschichteten Zylinder 11 und darauf ein mehrpoliges Magnetsystem 12, bestehend aus mehreren axial unterteilten Magnetringen, oder eingebetteten Magnetstäben, auf. Ferner ist auf der Welle 7 ein bipolarer Magnetring 13 zur Positionsbestimmung angeordnet. Der aus Blechen 10 geschichtete Zylinder dient als innerer magnetischer Rückschluß 11.

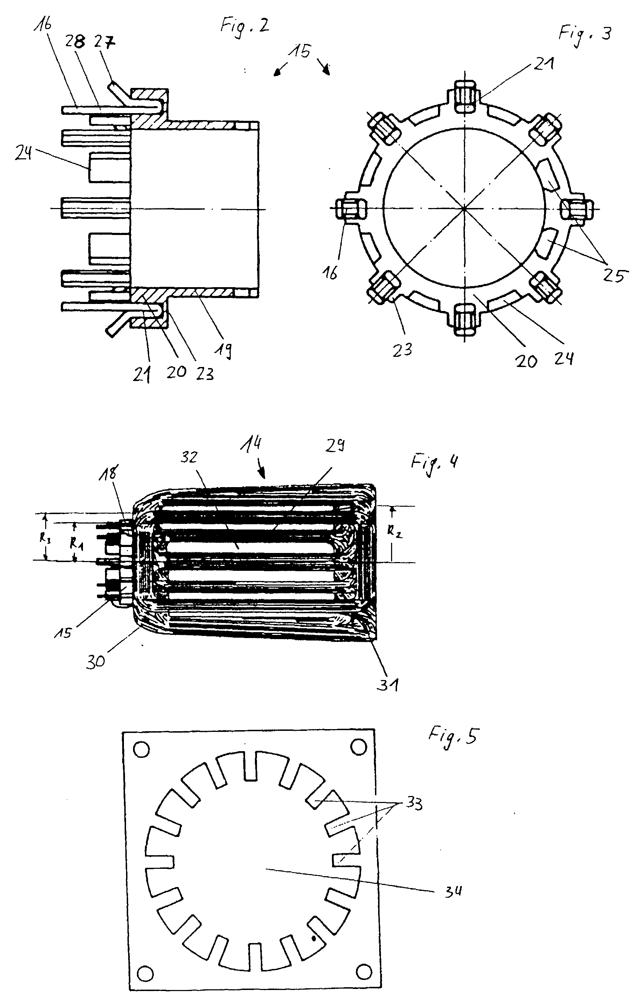

Der Ständer 3 besteht aus einer Ständerwicklung 14, einem Kunststoffkörper 15, mehreren Hakenösen 16 und einer Platine 17. Die Ständerwicklung 14 weist eine der Polzahl entsprechende Anzahl von Strängen 29 auf, die in Ringschaltung gewickelt sind. Der Kunststoffkörper 15 ist in Fig. 2 und Fig. 3 in dem Zustand abgebildet, in dem er sich vor dem Wickeln befindet, er besteht aus einem Hohlzylinder 19 mit einem auf einer Stirnseite angeordneten Kranz 20, der eine der Strangzahl entsprechende Anzahl von Ausnehmungen 21 aufweist, in denen die Hakenösen 22 befestigt sind. Der Hohlzylinder 19 und der Kranz 20 sind einteilig ausgebildet und gehen auf der Innenseite bündig ineinander über. Der Außendurchmesser des Kranzes 20 hingegen ist größer als der des Hohlzylinders 19. Zusätzlich weist der Kranz 20 im Bereich der Ausnehmungen 21 an seinen äußeren Mantelflächen erkerförmige Vorsprünge 23 auf. Auf der Stirnseite zwischen den Ausnehmungen 21 sind sockelförmige Abstandshalter 24 angeordnet, wobei an zwei Stellen jeweils zwischen zwei Paaren von Ausnehmungen 21 anstelle der Abstandshalter 24 Nuten 25 zur Aufnahme von Hallsensoren 26 ausgebildet sind. Diese Nuten 25 bilden eine justierfreie und gegenüber Erschütterung unempfindliche Aufnahme der Hallsensoren 26.

Die Wicklungsenden 18 der Ständerwicklung 14 sind jeweils derart über etwa den halben Umfang des Hohlzylinders 19, anschließend um die erkerartigen Vorsprünge 23, über die Hakenösen 16 und wieder etwa über den halben Umfang des Hohlzylinders geführt, daß der Kunststoffkörper 15 von den Wicklungsenden 18 umgeben und auch fixiert ist. Die Wicklungsenden 18 sind mit den Hakenösen 16 verschweißt.

Die Hakenösen 16 sind u-förmig ausgebildet und bestehen jeweils aus zwei Schenkeln 27, 28 unterschiedlicher Länge. Wenn die Hakenösen 16 im Kranz 20 angeordnet sind, ist der kürzere Schenkel 27 außerhalb der Ausnehmung 21, einen Haken bildend, abgebogen. Nachdem das entsprechende Wicklungsende über den kurzen Schenkel geführt ist, wird der kürzere Schenkel 27 zum längeren Schenkel 28 gebogen und verschweißt. Der längere Schenkel 28 der Hakenösen 16 ist somit als Stift ausgebildet und steht gegenüber den Abstandshaltern 24 etwa 4 mm über, so daß er in die Platine 17 gesteckt und verlötet werden kann. Der kürzere Schenkel 27 dient in erster Linie zur Befestigung der Wicklungsenden 18 und steht gegenüber den Abstandshaltern 24 nicht über.

Die Ständerwicklung 14 ist über die Hakenösen 16 mit der Platine 17 fest verlötet, wobei die Platine 17 auf den Abstandshaltern 24 aufliegt. Ferner sind die in den Nuten 25 angeordneten Hallsensoren 26 ebenfalls mit der Platine 17 verlötet. Zusätzlich sind auf der Platine 17 noch andere Elemente angeordnet. So sind z.B. mehrere, mit den entsprechenden Hakenösen elektrisch verbundene Stecker mit der Platine derart verlötet, daß sie aus dem Gehäuse 36 herausragen und von außen zugänglich sind. Die Platine 17 hingegen ist mit einer geeigneten Schnappverbindung fest mit dem Lagerschild 5 verbunden (keine Figur).

Die Ständerwicklung 14 ist als freitragende Trommelwicklung ausgebildet (Fig. 4). Sie wird über einen Wicklungsträger gewickelt und erhält durch thermische Behandlung unter Verwendung eines sogenannten Backlacks ihre Form. Der Backlack stellt die Isolation der Wicklung dar und bewirkt ein Zusammenkleben der einzelnen Drähte, wodurch die Formsteifigkeit auch nach Entfernen des Wicklungsträgers gewährleistet ist. Die grundsätzliche Anordnung der Wicklungsstränge ist schon aus DE-OS 34 38 747 bekannt, ohne daß dort schon die freitragende Form der Ständerwicklung 14 erwähnt ist und ohne daß dort die elektronische Verknüpfung der Wicklungsenden in der hier vorliegenden Weise ausgeführt ist. Die Ständerwicklung 14 weist an dem einen Wicklungskopf 30 einen Innenradius R₁ und an dem anderen Wicklungskopf 31 einen Innenradius R2 auf, wobei R₁ < R₂ ist. Die Wicklungsstränge 29 sind im Bereich zwischen den Wicklungsköpfen 30, 31 überwiegend axial und kreisförmig mit dem Radius R₂ angeordnet. Erst im Bereich des Wicklungskopfes 30 verjüngt sich der durch die Wicklungsstränge gebildete Kreis auf den Radius R₁. Der äußere Radius R₃ des Wicklungskopfes 30 ist dabei kleiner als der innere Radius R₂ des Wicklungskopfes 31. Die Ständerwicklung 14 weist vom Wicklungskopf 30 aus betrachtet nutenförmige Freiräume 32 bis zum Wicklungskopf 31 hin auf.

Der Außere magnetische Rückschluß 2 ist aus einem Blechpaket zusammengesetzt. Der Blechschnitt ist in Fig. 5 abgebildet, er weist eine runde mit Zähnen 33 versehene Ausstanzung 34 auf.

Der elektronisch kommutierte, kollektorlose Gleichstrommotor nach Fig. 1 wird montiert, indem die Ständerwicklung 14 mit dem daran befestigten Kunststoffkörper 15 über den Wicklungskopf 30 in das, den äußeren magnetischen Rückschluß 2 bildende, Blechpaket derart eingeführt wird, daß die nutenförmigen Freiräume 32 der Ständerwicklung 14 von den Zähnen 33 des Blechpaketes ausgefüllt werden. Die Ständerwicklung 14 wird so weit in das Blechpaket eingeführt, bis sie auf beiden Seiten des Blechpaketes etwa gleich weit herausragt. Anschließend wird die Platine 17 mit den Hakenösen 16 und den Hallsensoren 26 verlötet. Auf dem so gebildeten Ständer 3 wird nun der Lagerschild 5 aufgeschoben, der eine geeignete Vorrichtung zur Befestigung der Platine 17 enthält. Der Läufer 4 wird durch den Ständer 3 auf das Lager 8 des Lagerschildes 5 und zuletzt der Lagerschild 6 mit dem Lager 9 auf den Läufer 4 geschoben. Dabei sind im montierten Zustand die Hallsensoren 26 im Bereich der Mantelfläche des Magnetrings 13 angeordnet.

## Patentansprüche

1. Elektronisch kommutierter, kollektorloser Gleichstrommotor (1) mit einem einen mehrpolig magnetisierten permanentmagnetischen Körper (12) aufweisenden Läufer (4), und mit einer den Läufer (4) umgebenden mehrere Stränge (29) aufweisenden Ständerwicklung (14), die außen von einem magnetischen Rückschluß (2) umgeben ist,
- bei dem die Wicklungsenden (18) der Stränge (29) jeweils zwischen zwei eine Hakenöse (16) bildenden Schenkeln (27, 28) geführt und elektrisch mit den Hakenösen (16) verbunden sind, die Hakenösen (16) mit einem zylindrischen, zentrisch zur Ständerwicklung (14) angeordneten Kunststoffkörper (15) verbunden sind, bei dem ein Schenkel (28) jeder Hakenöse (16) in eine Platine (17) gesteckt ist, und
- bei dem auf einer Stirnseite des Kunststoffkörpers (15) ein Kranz (20) angebracht ist, in dem sich die Hakenösen (16) in kreisförmig angeordneten Ausnehmungen (21) befinden.

2. Gleichstrommotor nach Anspruch 1, dadurch gekennzeichnet, daß der zylindrische Kunststoffkörper (15) und der Kranz (20) einteilig ausgebildet und auf der Innenseite bündig sind, daß die Hakenösen (16) in die Ausnehmungen (21) gesteckt sind, daß wenigstens drei, zwischen den Hakenösen (16) auf dem Kranz (20) angeordnete, Abstandshalter (24) angebracht sind, und daß die Hakenösen (16) u-förmig gebogen sind und zwei unterschiedlich lange Schenkel (27, 28) aufweisen, wobei der kurze Schenkel (27) nicht über die Abstandshalter (24) und der lange Schenkel (28) über die Abstandshalter (24) hinausragend ausgebildet sind.

3. Gleichstrommotor nach Anspruch 1 oder 2, dadurch gekennzeichnet. daß der Kranz (20) an seiner äußeren Mantelfläche im Bereich der Ausnehmungen (21) Vorsprünge (23) aufweist.

4. Gleichstrommotor nach einem der Ansprüche 2 bis 3, dadurch gekennzeichnet, daß die Enden der langen Schenkel (28) mit der Platine (17) verlötet sind.

5. Gleichstrommotor nach einem der Ansprüche 1 bis 4, dadurch gekennzeichnet, daß wenigstens ein Hallsensor (26) zwischen zwei Hakenösen (16) angeordnet und mit der Platine (17) verlötet ist.

6. Gleichstrommotor nach Anspruch 5, dadurch gekennzeichnet, daß die Platine (17) mit einem Gehäuse (36) verbunden ist und daß auf der Platine (17) Stecker verlötet angeordnet sind, die aus dem Gehäuse (36) herausragen.

7. Gleichstrommotor nach einem der Ansprüche 1 bis 6, dadurch gekennzeichnet, daß die Ständerwicklung (14) eine freitragende Trommelwicklung ist, daß der Kunststoffkörper (15) in einen Wicklungskopf (30) der Ständerwicklung (14) eingeschoben ist, daß die Wicklungsenden (18) wenigstens teilweise um den zylindrischen Kunststoffkörper (15) gewickelt und mit den Hakenösen (16) verbunden sind.

8. Gleichstrommotor nach Anspruch 7, dadurch gekennzeichnet, daß die Ständerwicklung (14) an dem einen Wicklungskopf (30) einen Innenradius R₁ und an dem anderen Wicklungskopf (31) einen Inennradius R₂ aufweist, wobei R₁ < R₂ ist, daß die Wicklungsstränge (29) im Bereich zwischen den Wicklungsköpfen (30, 31) axial und kreisförmig mit dem Radius R₂ angeordnet sind, daß sich der Radius erst im Bereich des einen Wicklungskopfes (30) verjüngt, daß der äußere Radius R₃ des einen Wicklungskopfes (30) kleiner als der innere Radius R₂ des anderen Wicklungskopfes (31) ist, und daß die Ständerwicklung (14) von der Seite des Wicklungskopfes (30) aus betrachtet zwischen den Wicklungsträngen (29) nutenförmige Freiräume (32) aufweist, so daß die Ständerwicklung (14) in einen entsprechend geformten äußeren magnetischen Rückschluß (2) axial geschoben werden kann.

## Claims

1. An electronically commutated, collectorless direct-current motor (1) having a rotor (4) with a multipolar body (12) of permanent-magnet material and a stator coil (14) surrounding the rotor and having a plurality of phase windings, said stator coil (14) being surrounded by a magnetic yoke (2),
- wherein the ends (18) of the phase windings (29) are respectively run between two legs (27, 28) forming an eyehook (16) and are electrically connected to the eyehooks (16), which are connected with a cylindrical plastic body (15) disposed concentrically with the stator coil (14),
- wherein one leg (28) of each of the eyehooks (16) is inserted in a printed circuit board (17), and wherein one end of the plastic body (15) is provided with a rim (20) which has circularly arranged recesses (21) containing the eyehooks (16).

2. A direct-current motor as claimed in claim 1, characterized in that the cylindrical plastic body (15) and the rim (20) are a one-piece molding and are flush on the inside, that the eyehooks (16) are inserted in the recesses (21), that at least three spacers (24) are arranged on the rim (20) between the eyehooks (16), and that the eyehooks (16) are bent to a U-shape and have two legs (27, 28) of differing lengths, with the short leg (27) extending to the spacers (24) and the long leg (28) extending beyond the spacers (24).

3. A direct-current motor as claimed in claim 1 or 2, characterized in that in the area of the recesses (21), the rim (20) has projections (23) on its outer circumferential surface.

4. A direct-current motor as claimed in claim 2 or 3, characterized in that the ends of the long legs (28) are soldered to the printed circuit board (17).

5. A direct-current motor as claimed in claim 4, characterized in that at least one Hall-effect sensor (26) is disposed between two eyehooks (16) and soldered to the printed circuit board (17).

6. A direct-current motor as claimed in claim 5, characterized in that the printed circuit board (17) is connected to a frame (36), and that connectors are soldered to the printed circuit board (17) which protrude from the frame (36).

7. A direct-current motor as claimed in any one of claims 1 to 6, characterized in that the stator coil (14) is a self-supporting drum winding, that the plastic body (15) is inserted in one winding head (30) of the stator coil (14), and that the ends (18) of the stator coil are wound, at least partly, around the cylindrical plastic body (15) and are connected with the eyehooks (16).

8. A direct-current motor as claimed in claim 7, characterized in that the stator coil (14) has an inside radius R₁ at said one winding head (30) and an inside radius R₂ at the other winding head (31), with R₁ < R₂, that in the area between the winding heads (30, 31), the phase windings (29) are arranged axially and in a circle with the radius R₂, that the radius decreases only in the area of said one winding head (30), that the outside radius R₃ of said one winding head (30) is smaller than the inside radius R₂ of the other winding head (31), and that the stator coil (14), as viewed from the side of said one winding head (30), has slot-shaped free spaces (32) between the phase windings (29), so that the stator coil (14) can be axially inserted into a correspondingly shaped external magnetic yoke (2).

## Revendications

1. Moteur à courant continu (1), sans collecteur, à commutation électronique, comportant un rotor (4) qui présente un aimant permanent (12) à magnétisation multipolaire, ainsi qu'un enroulement de stator (14) qui entoure le rotor (4), qui présente plusieurs tranches (29) et qui est entouré extérieurement d'une armature (2) de fermeture du circuit magnétique, moteur dans lequel :
- les extrémités (18) des tranches d'enroulement (29) passent chacune entre deux branches (27, 28) formant une boucle de crochet (16) et sont électriquement reliées avec les boucles de crochet (16), les boucles de crochet (16) étant reliées avec une pièce cylindrique en plastique (15) disposée au centre par rapport à l'enroulement de stator (14), et
- une branche (28) de chaque boucle de crochet (16) est enfichée dans une platine (17), et
- sur la face frontale de la pièce en plastique (15) est rapportée une couronne (20) dans laquelle se trouvent les boucles de crochet (16), dans des évidements (21) disposés en cercle.

2. Moteur à courant continu selon la revendication 1, caractérisé par le fait que la pièce cylindrique en plastique (15) et la couronne (20) sont conçues d'une seule pièce et ont leurs faces intérieures alignées, par le fait que les boucles de crochet (16) sont enfichées dans les évidements (21), par le fait que sont rapportés au moins trois écarteurs (24) disposés sur la couronne (20) entre les boucles de crochet (16), et par le fait que les boucles de crochet (16) sont pliées en forme de U et présentent deux branches (27, 28) de longueur différente, la petite branche (27) étant conçue ne dépassant pas au-delà des écarteurs (24) et la grande branche (28) étant conçue dépassant au-delà des écarteurs (24).

3. Moteur à courant continu selon la revendication 1 ou 2, caractérisé par le fait que la couronne (20) présente, sur sa surface latérale extérieure, dans la zone des évidements (21), des saillies (23).

4. Moteur à courant continu selon l'une des revendications 2 à 3, caractérisé par le fait que les extrémités des grandes branches (28) sont soudées avec la platine (17).

5. Moteur à courant continu selon l'une des revendications 1 à 4, caractérisé par le fait qu'au moins un capteur Hall (26) est disposé entre deux boucles de crochet (16) et soudé avec la platine (17).

6. Moteur à courant continu selon la revendication 5, caractérisé par le fait que la platine (17) est reliée avec un carter (36) et par le fait que sur la platine (17) sont disposés, soudés, des connecteurs mâles qui dépassent hors du carter (36).

7. Moteur à courant continu selon l'une des revendications 1 à 6, caractérisé par le fait que l'enroulement de stator (14) est un enroulement en tambour autoporteur, par le fait que la pièce en plastique (15) est enfilée dans une tête (30) d'un enroulement de stator (14), par le fait que les extrémités (18) de l'enroulement sont enroulées au moins partiellement autour de la pièce cylindrique en plastique (15) et sont reliées avec les boucles de crochet (16).

8. Moteur à courant continu selon la revendication 7, caractérisé par le fait que l'enroulement de stator (14) présente, à la première tête d'enroulement (30), un rayon intérieur R₁ et, à l'autre tête d'enroulement (31), un rayon intérieur R₂, avec R₁ < R₂, par le fait que dans la zone entre les têtes d'enroulement (30, 31), les tranches d'enroulement (29) sont disposées en direction axiale et en forme de cercle avec le rayon R₂, par le fait que ce n'est que dans la zone de la première tête d'enroulement (30) que le rayon va en diminuant, par le fait que le rayon extérieur R₃ de la première tête d'enroulement (30) est inférieur au rayon inférieur R₂ de l'autre tête d'enroulement (31), et par le fait que, vu depuis la tête d'enroulement (30), le bobinage de stator (14) présente des espaces libres (32) en forme d'encoches de sorte que l'on peut enfiler, selon la direction axiale, l'enroulement de stator (14) dans une armature extérieure (2) de fermeture du circuit magnétique, de forme appropriée.
